# EUROPEAN PATENT APPLICATION

(11) **EP 2 833 577 A1**
(43) Date of publication of application: **04.02.2015**
(21) Application number: 13770021.7
(22) Date of filing: 31.01.2013
(51) Int. Cl.: H04L 12/66, H04L 12/46

(54) **INFORMATION PROCESSING DEVICE, INFORMATION PROCESSING METHOD, AND PROGRAM**

(30) Priority: 28.03.2012 JP 2012074732
(71) Applicant: Sony Corporation, Tokyo 108-0075 (JP)
(72) Inventor: SHIMAKAWA, Masato, Tokyo 108-0075 (JP)
(74) Representative: MFG Patentanwälte Meyer-Wildhagen Meggle-Freund Gerhard PartG mbB
(86) International application number: PCT/JP2013/000529
(87) International publication number: WO 2013/145522

(57) **Abstract**

[Object] To realize the optimum communication without excluding P2P depending on a communication environment.

[Solving Means] An information processing apparatus includes a communication unit and a controller. The communication unit is capable of communicating with another information processing apparatus in a network by using a method via a relay server in the network or a peer-to-peer method via no relay server. The controller detects a communication environment of the information processing apparatus, the controller being capable of determining a method of communicating with the other information processing apparatus depending on the communication environment by means of the peer-to-peer communication if at all possible.

## Description

### Technical Field

The present technology relates to an information processing apparatus capable of communicating with another information processing apparatus, and an information processing method and a program of the information processing apparatus.

### Background Art

In the past, there is known peer to peer (P2P) architecture, which is used to establish communication among a large number of devices. Because communication using the P2P method is characterized in that, compared to communication using the client-server method, accesses are less concentrated on a server even if a huge number of devices connect to a network, more and more attention is paid to the P2P method from a commercial point of view in recent years.

In general, in the P2P communication, because behaviors of various routers (NAT (Network Address Translation) routers) existing between devices are different from each other, a NAT type is determined by using a STUN (Simple Traversal of UDP through NATs) server or the like, and an actual P2P communication method is determined (for example, see Patent Documents 1 and 2).
Patent Document 1: Japanese Patent Application Laid-open No. 2010-252261
Patent Document 2: Japanese Patent Application Laid-open No. 2011-188358

### Summary of Invention

### Problem to be solved by the Invention

However, it takes a relatively longer time for the process of determining a NAT type (it is said that it sometimes takes about 40 seconds). Further, if a large number of devices perform P2P communication and if the devices are mobile devices, the above-mentioned determining process is performed again and again every time the devices travel, whereby an enormous load is imposed on the server side, which is problematic.

Further, because IPv4 is being drained in recent years, attention is paid to carrier-grade NAT (large-scale NAT). Carrier-grade NAT means that a telecommunications carrier such as an ISP (Internet Service Provider) performs network address translation (NAT) by using a private address in the carrier's network at a point connecting with a network of another carrier. It is expected that, if more and more carrier-grade NATs are introduced, an environment, which requires servers to perform the process of determining the P2P communication method, will be larger, whereby it is expected that this situation will make the above-mentioned problem worse.

In view of the above-mentioned circumstances, it is an object of the present technology to provide an information processing apparatus, an information processing method, and a program capable of realizing the optimum communication without excluding P2P depending on a communication environment.

### Means for solving the Problem

To solve the above-mentioned problem, an information processing apparatus according to an embodiment of the present technology includes a communication unit and a controller. The communication unit is capable of communicating with another information processing apparatus in a network by using a method via a relay server in the network or a peer-to-peer method via no relay server. The controller detects a communication environment of the information processing apparatus, the controller being capable of determining a method of communicating with the other information processing apparatus depending on the communication environment by means of the peer-to-peer communication if at all possible.

The controller may detect change of a communication environment resulting from travel of the information processing apparatus, and determine the communication method depending on the change of the communication environment.

With this configuration, the information processing apparatus is capable of realizing the optimum communication without excluding P2P depending on change of a communication environment resulting from travel of the information processing apparatus.

The controller may determine existence/non-existence of a communication relay apparatus installed between the information processing apparatus and the other information processing apparatus, and the network, or a type of the communication relay apparatus, and determine whether the information processing apparatus or the other information processing apparatus starts the peer-to-peer communication depending on the existence/non-existence of installation or the type.

With this configuration, the information processing apparatus is capable of starting P2P communication from the side having better connection depending on whether the information processing apparatus side or the other information processing apparatus side has a communication relay apparatus such as a NAT router, a proxy server, or a firewall, and depending on the type of the communication relay apparatus.

The controller may detect change of the communication environment based on at least one of change of a status of the communication unit, change of a level of a signal received by the communication unit, and change of an IP address used by the communication unit.

With this configuration, by detecting at least one of the three kinds of change, the information processing apparatus is capable of detecting change of a communication environment.

The information processing apparatus may further include a storage unit. In this case, the communication unit may be capable of communicating with a determining server in the network, the determining server being capable of determining the communication environment. In this case, the controller may control the communication unit to receive communication environment determined information showing the determined communication environment, control the storage unit to store the received communication environment determined information, and determine the communication method based on the stored communication environment determined information.

With this configuration, if the information processing apparatus once obtains communication environment determined information from the determining server and stores the communication environment determined information, it is not necessary to obtain communication environment determined information from the determining server again as long as the communication environment is not changed, whereby it is possible to reduce a load imposed on the determining server as much as possible.

The communication unit may include a first network interface and a second network interface. The first network interface is capable of connecting to a first network having a first band and a first available area. The second network interface is capable of connecting to a second network having a second band and a second available area. In this case, the controller may control the communication unit to use the first network interface for communication with the other information processing apparatus via the relay server, and to use the second network interface if at all possible for the peer-to-peer communication with the other information processing apparatus.

With this configuration, the information processing apparatus is capable of selectively using communication via a server and P2P communication depending on the characteristics of the networks having different bands and different available areas.

The second band may be larger than the first band, and the second available area may be smaller than the first available area.

Here, the first network interface is for example a 3G interface, and the second network interface is a wireless LAN (WiFi) interface, but they are not limited to these examples.

The controller may control the communication unit to receive location information showing a location of the information processing apparatus via the first network interface, and control the storage unit to store the communication environment determined information in association with the received location information. Further, in this case, the controller may enable a network interface determined that the peer-to-peer communication is available, and disable a network interface determined that the peer-to-peer communication is not available, based on the received location information and based on the stored location information and communication environment determined information.

With this configuration, the information processing apparatus disables (turns off the power to) the network interface, which is determined that peer-to-peer communication is not available, whereby it is possible to establish peer-to-peer communication with the power consumption decreased.

The communication unit may include a logical communication module capable of continuing communication by the same procedure by using an application of the information processing apparatus, even if the communication method is changed.

With this configuration, the information processing apparatus is capable of changing communication via a relay server and P2P communication while continuing the application, which keeps a user free from recognizing the change.

An information processing method according to another embodiment of the present technology, performed by an information processing apparatus, includes detecting a communication environment of the information processing apparatus. Further, in the method, as a method of communicating with another information processing apparatus, one of a method of communicating with the other information processing apparatus via a relay server in a network and a peer-to-peer communication method via no relay server is determined based on the communication environment, the peer-to-peer communication method being selected if at all possible.

A program according to another embodiment of the present technology causes an information processing apparatus to execute the step of detecting and the step of determining. In the step of detecting, a communication environment of the information processing apparatus is detected. In the step of determining, as a method of communicating with another information processing apparatus, one of a method of communicating with the other information processing apparatus via a relay server in a network and a peer-to-peer communication method via no relay server is determined based on the communication environment, the peer-to-peer communication method being selected if at all possible.

An information processing apparatus according to another embodiment of the present technology includes a communication unit and a manager. The communication unit is capable of communicating with a first communication apparatus and a second communication apparatus in the network, the first communication apparatus and the second communication apparatus being capable of communicating with each other by using a method via a relay server in a network or a peer-to-peer method via no relay server. The manager manages determined information determining a communication environment of the first or second communication apparatus, the determined information being available for one communication apparatus of the first and second communication apparatuses to peer-to-peer communicate with the other communication apparatus if at all possible depending on the communication environment.

### Effect of the Invention

As described above, according to the present technology, it is possible to realize the optimum communication without excluding P2P depending on a communication environment.

### Brief Description of Drawings

[Fig. 1] A diagram showing the network configuration of a system of a first embodiment of the present technology.
[Fig. 2] A block diagram showing the hardware configuration of a messaging server of the above-mentioned system.
[Fig. 3] A block diagram showing the hardware configuration of a device of the above-mentioned system.
[Fig. 4] A block diagram showing the configuration of the software modules of the messaging server of the above-mentioned system.
[Fig. 5] A block diagram showing the configuration of the software modules of a P2P communication test server of the above-mentioned system.
[Fig. 6] A block diagram showing the configuration of the software modules of the device of the above-mentioned system.
[Fig. 7] A diagram showing a classification correspondence table of NAT used to determine a NAT type by means of STUN.
[Fig. 8] A flowchart showing the flow of communication environment determining process performed by the device.
[Fig. 9] A flowchart showing the flow of the communication environment determining process performed by the P2P communication test server.
[Fig. 10] A flowchart showing the flow of the communication environment specifying process performed by the device.
[Fig. 11] A flowchart showing the flow of communication method determining process performed by the device.
[Fig. 12] A table showing availability of P2P communication depending on NAT types.
[Fig. 13] A flowchart showing the flow of P2P communication connection process performed by a connection-requestor device.
[Fig. 14] A flowchart showing the flow of P2P communication connection process performed by a connection-requested device.
[Fig. 15] A flowchart showing the flow of P2P communication connection process performed by the P2P communication test server.
[Fig. 16] A flowchart showing the flow of the message transfer process performed by the messaging server.
[Fig. 17] A diagram showing an example of change of the P2P communication method between the devices resulting from travel of the device.
[Fig. 18] A diagram showing the network configuration of the system of a second embodiment of the present technology.
[Fig. 19] A block diagram showing the configuration of software modules of the device of the above-mentioned system.
[Fig. 20] a flowchart showing the flow of network interface control process depending on P2P communication availability performed by the device.
[Fig. 21] A flowchart showing the flow of communication environment determining process in relation to network interface control process performed by the P2P communication test server.
[Fig. 22] A diagram showing an example of change of the P2P communication method between the devices resulting from travel of the device.

### Modes for Carrying Out the Invention

Hereinafter, embodiments of the present technology will be described with reference to the drawings.

### <First embodiment>

First, a first embodiment of the present technology will be described.

### [Network configuration of system]

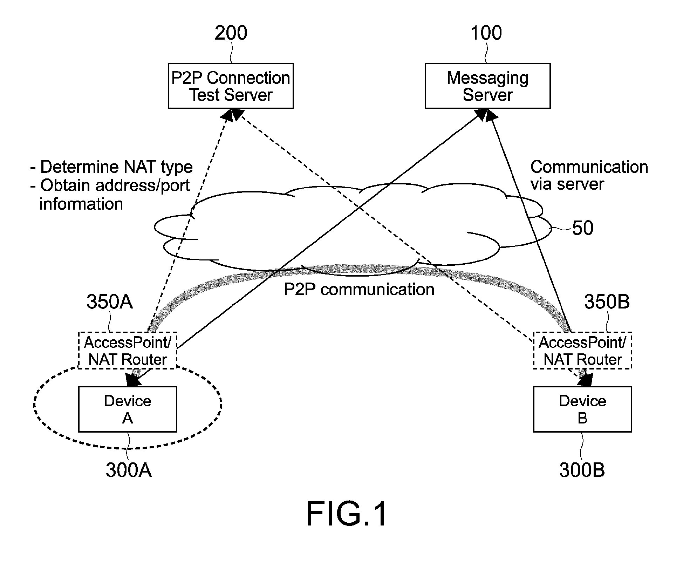

Fig. 1 is a diagram showing the network configuration of a system of this embodiment.

As shown in Fig. 1, the system includes a messaging server 100 and a P2P communication test server 200 in a cloud, and a plurality of devices 300 capable of connecting to the respective servers via a WAN (Wide Area Network) 50.

The messaging server 100 is a server relaying communication (messages) between the respective devices 300.

The device 300 may be any information processing apparatus such as for example a smartphone, a mobile phone, a tablet PC (Personal Computer), a desktop PC, a laptop PC, a PDA (Personal Digital Assistant), a mobile AV player, an E-book reader, a digital still camera, a camcorder, a television set, a PVR (Personal Video Recorder), a video game console, a projector, an automotive navigation system, a digital photo frame, an HDD (Hard Disk Drive) device, a health-care device, or a home appliance. Fig. 1 illustrates only two devices, i.e., the device 300A and the device 300B, but three or more devices 300 may be provided.

Each device 300 is capable of communicating with the messaging server 100 by constantly connecting to the messaging server 100, and capable of communicating with another device 300 via the messaging server 100. Further, if possible, each device 300 is also capable of directly P2P communicating with a device 300.

Each device 300 communicates with the above-mentioned messaging server 100, the P2P communication test server 200, and another device 300 via a communication relay apparatus 350, and directly communicates with them without the communication relay apparatus 350.

If the device 300 is a stationary apparatus such as for example a desktop PC, the communication relay apparatus 350 may be for example a NAT router, a proxy server, a firewall, or the like. That is, in this case, the communication relay apparatus 350 is configured to perform communication-relay functions between an internal (device 300 side) network and an external (cloud side) network, and to determine a particular internal device and to disable connection of this internal device unless an external server does not take a special measure against difference of addresses used in the both networks and against a security mechanism.

If the device 300 is a mobile device such as for example a smartphone, the communication relay apparatus 350 may be an access point for a wireless LAN.

The P2P communication test server 200 is capable of communicating with the respective devices 300. Before each device 300 communicates with the messaging server 100, the P2P communication test server 200 determines a communication environment such as a NAT type in response to a request from each device 300, and replies the determined information to each device 300. Further, when the devices 300 P2P communicates with each other, the P2P communication test server 200 performs auxiliary process so that each device 300 may obtain an IP address and a port number of the WAN side.

### [Hardware configuration of messaging server]

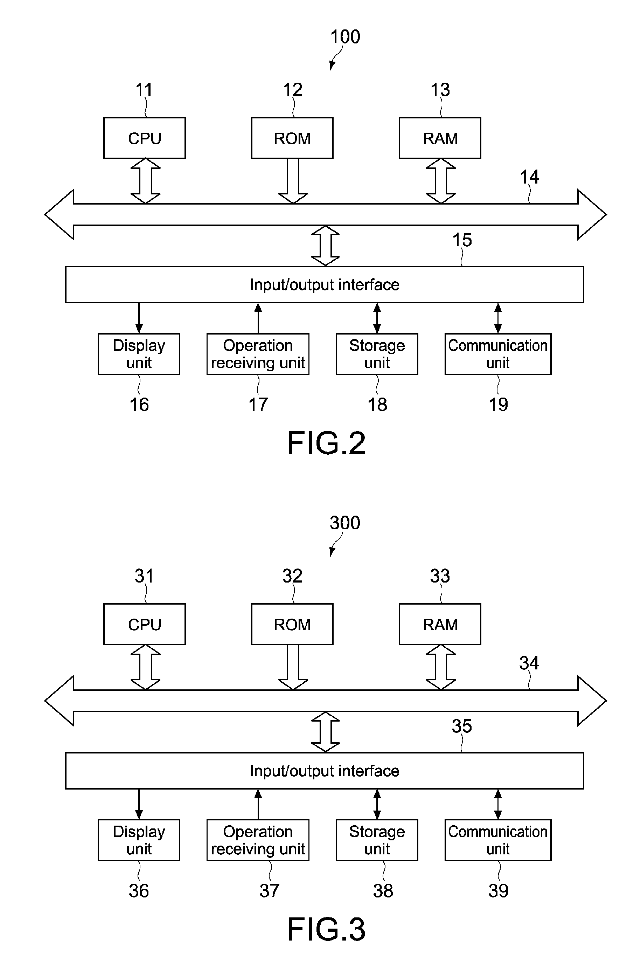

Fig. 2 is a diagram showing the hardware configuration of the above-mentioned messaging server 100. As shown in Fig. 2, the messaging server 100 includes a CPU (Central Processing Unit) 11, a ROM (Read Only Memory) 12, a RAM (Random Access Memory) 13, an input/output interface 15, and a bus 14 connecting them.

The CPU 11 as necessary accesses the RAM 13 and the like appropriately, performs various kinds of arithmetic processing, and entirely controls the respective blocks of the messaging server 100. The ROM 12 is a nonvolatile fixed memory storing firmware such as an OS and programs executed by the CPU 11 and various parameters. The RAM 13 is used as a work area and the like for the CPU 11, and temporarily stores the OS, various kinds of application software being executed, and various kinds of data being processed.

The display unit 16, the operation receiving unit 17, the storage unit 18, the communication unit 19, and the like connect to the input/output interface 15.

The display unit 16 is a display device employing for example an LCD (Liquid Crystal Display), an OELD (Organic ElectroLuminescence Display), a CRT (Cathode Ray Tube), or the like.

The operation receiving unit 17 is for example a pointing device such as a mouse, a keyboard, a touchpad, or another input apparatus. If the operation receiving unit 17 is a touchpad, the touchpad and the display unit 16 may be structured integrally.

the storage unit 18 is a nonvolatile memory such as for example a HDD (Hard Disk Drive), a flash memory (SSD: Solid State Drive), or another solid-state memory. The storage unit 18 stores the above-mentioned OS, various kinds of application software, and various kinds of data. Specifically, in this embodiment, the storage unit 18 stores programs such as a plurality of software modules described later.

The communication unit 19 is an NIC or the like for connecting the WAN 50, and is in charge of communication with the devices 300.

### [Hardware configuration of P2P communication test server]

The hardware configuration of the above-mentioned connection test server 200 is similar to the above-mentioned hardware configuration of the messaging server, and description thereof will thus be omitted.

In this embodiment, the hardware modules of the connection test server 200 corresponding to the CPU 11, the storage unit 18, and the communication unit 19 of the above-mentioned messaging server 100 will be referred to as a CPU 21, a storage unit 28, and a communication unit 29, respectively. The storage unit 28 stores software modules described below and databases of communication environment determination result information on the respective devices 300 and the like.

### [Hardware configuration of device]

Fig. 3 is a diagram showing the hardware configuration of the above-mentioned device 300. As shown in Fig. 3, the hardware configuration of the device 300 is basically similar to the hardware configuration of the above-mentioned server 100.

That is, the device 300 includes a CPU 31, a ROM 32, a RAM 32, an input/output interface 35, a bus 34 connecting them, a display unit 36, an operation receiving unit 37, a storage unit 38, and a communication unit 39. Here, the display unit 36 may be built in the device 300, or externally connected to the device 300.

The CPU 31 controls the respective blocks such as the storage unit 38 and the communication unit 39, establishes communication with the messaging server 100 and the connection test server 200, and performs various kinds of data processing.

The storage unit 38 stores programs such as a plurality of software modules described later and various databases of communication environment determination result information and the like. The programs may be provided to the device 300 via the WAN 50, or the programs in a storage medium, which is capable of being read by the device 300, may be provided.

If the device 300 is a mobile device such as a smartphone, the communication unit 39 may be a module for wireless communication such as 3G, wireless LAN, and the like.

If the device 300 is, for example, a digital photo frame or a health-care device (for example, thermometer, weight scale, blood-pressure gauge, pulse monitor, etc.), the operation receiving unit 37 may only include a button or a switch, and may not have a character input function of a keyboard or a touchpad.

### [Module configuration of messaging server]

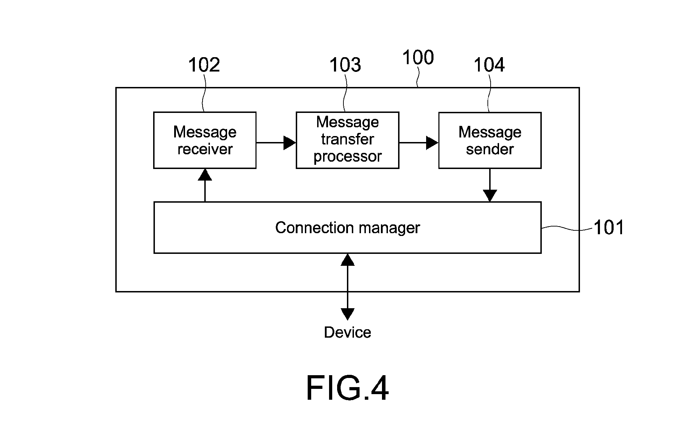

Fig. 4 is a diagram showing the configuration of the software modules of the above-mentioned messaging server 100. As shown in Fig. 4, the messaging server 100 includes software modules, i.e., a connection manager 101, a message receiver 102, a message transfer processor 103, and a message sender 104.

The connection manager 101 receives a connection request from the device 300, establishes connection to the device 300, and manages the connection.

The message receiver 102 receives a message sent from the device 300 via the connection manager 101.

The message transfer processor 103 delivers the message received from the device 300 to the message sender 104 in order to transfer it to another device 300, which is predetermined as the destination of the message.

The message sender 104 sends the message received from the message transfer processor 103 to the device 300, i.e., the destination, via the connection manager 101.

### [Module configuration of P2P communication test server]

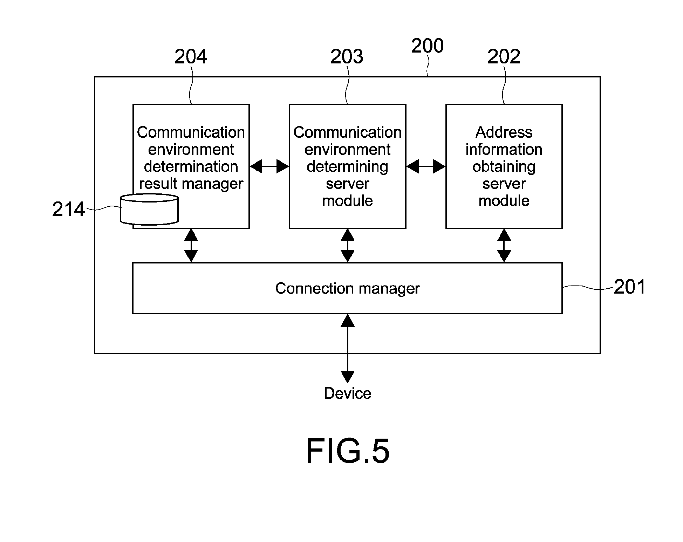

Fig. 5 is a diagram showing the configuration of the software modules of the above-mentioned P2P communication test server 200. As shown in Fig. 5, the P2P communication test server 200 includes software modules, i.e., a connection manager 201, an address information obtaining server module 202, a communication environment determining server module 203, and a communication environment determination result manager 204.

The connection manager 201 receives a connection request from the device 300, establishes connection to the device 300, and manages the connection.

The address information obtaining server module 202 helps the device 300 to obtain an IP address and a port number of the WAN side during P2P communication.

The communication environment determining server module 203 determines the communication environment of the device 300. Specifically, the communication environment determining server module 203 performs process such as NAT type determination by means of STUN.

The communication environment determination result manager 204 manages communication environment determination result information in the database 214 by using communication environment specifying information sent from the device 300 as a key.

### [Module configuration of device]

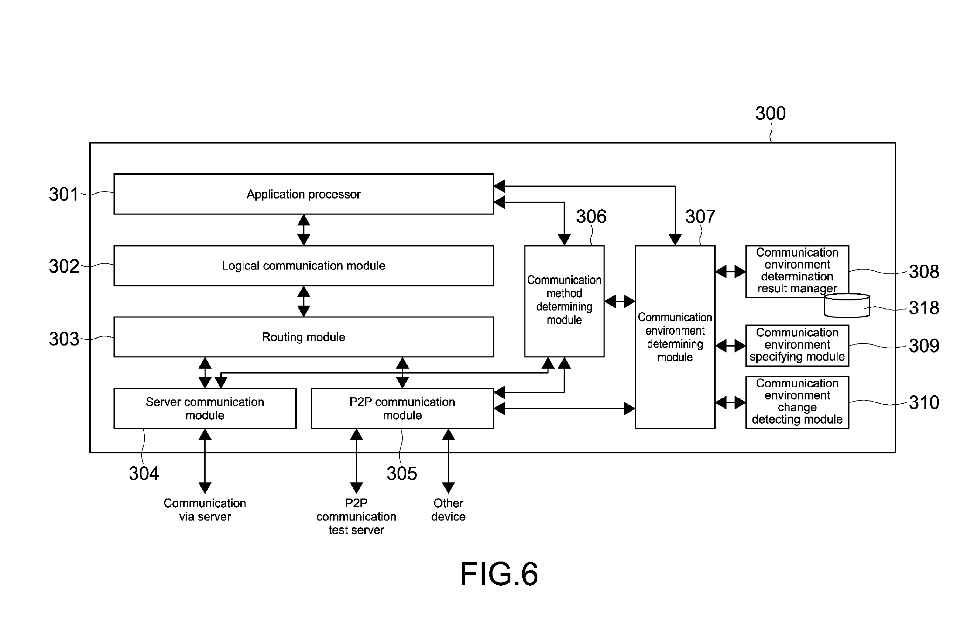

Fig. 6 is a diagram showing the configuration of the software modules of the above-mentioned device 300. As shown in Fig. 6, the device 300 includes software modules, i.e., an application processor 301, a logical communication module 302, a routing module 303, a server communication module 304, a P2P communication module 305, a communication method determining module 306, a communication environment determining module 307, a communication environment determination result manager 308, a communication environment specifying module 309, and a communication environment change detecting module 310.

The application processor 301 processes applications of the device 300.

The logical communication module 302 provides the logical connection API (Application Program Interface) capable of continuing a communication status without affected by cutoff of connection of a lower layer and the like by using the message communication (packet communication) mechanism of the lower layer (server communication module 304 and P2P communication module 305).

The routing module 303 appropriately routes a message to the server communication module 304 or the P2P communication module 305 depending on the destination of the message, and delivers messages received by both the communication units to the logical communication module 302 and the application processor 301, i.e., the upper layer.

The server communication module 304 communicates with another device 300 via the messaging server 100.

The P2P communication module 305 cooperates with the P2P communication test server 200, and P2P communicates with another device 300.

The communication method determining module 306 determines availability of P2P communication based on a determination result determined by the communication environment determining module 307, and, if available, determines a connection method for P2P communication.

The communication environment determining module 307 performs communication environment determining process for the above-mentioned P2P communication by using communication environment determination result information, communication environment specifying information, communication environment change detection information, and the like.

The communication environment determination result manager 308 manages communication environment determination result information received from the P2P communication test server 200 in the database 318.

The communication environment specifying module 309 obtains communication environment specifying information as a key to specify the communication environment. Specifically, the communication environment specifying module 309 for example obtains a UUID (Universally Unique Identifier) of a router by using a UPnP IGD, and obtains a gateway MAC address by means of ARP (Address Resolution Protocol), to thereby specify the above-mentioned communication environment.

The communication environment change detecting module 310 monitors a network interface of the communication unit 39 and the like, and determines the timing at which a method for communicating with another device 300 should be changed based on a changed communication status. The communication environment is changed resulting from the travel of the device 300.

### [Operations of system]

Next, operations of the messaging server 100, the P2P communication test server 200, and the device 300 of the system configured as described above will be described. In this embodiment and the other embodiment, a CPU and the above-mentioned respective software modules, which are controlled and executed by the CPU, cooperatively execute operations of the messaging server 100, the P2P communication test server 200, or the device 300.

### (Cooperative system of messaging server and device)

In this embodiment, the respective devices 300 are capable of communicating with each other and cooperatively operating by using the messaging server 100 in the cloud.

When each device 300 is booted, each device establishes constant connection to the messaging server 100. At this time, each device 300 notifies the messaging server 100 of the device ID uniquely assigned to each device 300, and the messaging server 100 relays communication between the devices 300 based on the device IDs.

At this time, communication is established based on messages (packets), and a device ID or the like is used to determine a destination or the like.

If possible, the devices 300 P2P communicates with each other in order to reduce the load imposed on the cloud side (the messaging server 100).

### (Basic process of P2P communication)

In the system of this embodiment, in order that the devices 300 P2P communicate with each other, it is necessary to provide a function of connecting with each other in a TCP/IP network beyond a NAT router (communication relay apparatus 350).

For example, a protocol called STUN realizes such a function. STUN has functions of determining existence and the type of NAT for the device 300, and obtaining a global IP address and a port number, which the device 300 uses to connect to another device 300.

In this embodiment, because the P2P communication test server 200 executes a protocol typified by STUN, as described above, the P2P communication test server 200 includes the communication environment determining server module 203 for determining a NAT type, and the address information obtaining server module 202 for obtaining address and port number information.

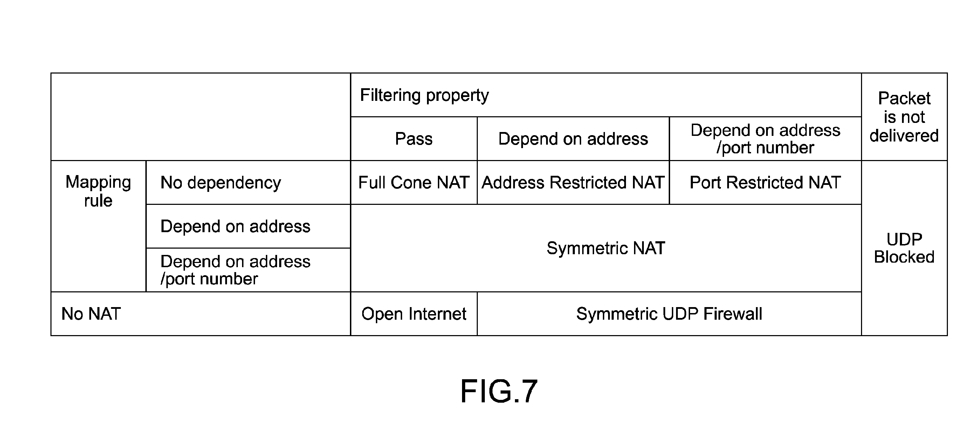

First, each device 300 previously communicates with the P2P communication test server 200, and determines a NAT type. Fig. 7 is a diagram showing a classification correspondence table of NAT used to determine a NAT type by means of STUN.

As shown in Fig. 7, NAT types are classified into full cone NAT, address restricted cone NAT, port restricted cone NAT, symmetric NAT, UDP blocked, open internet, and symmetric UDP firewall depending on the mapping rule, filtering property, packet drop, existence of NAT, and the like. Restriction in communication increases in the ascending order of full cone NAT, address restricted cone NAT, port restricted cone NAT, and symmetric NAT.

Next, the device 300, which wishes to establish P2P communication (connection-requestor), obtains the NAT type of the connection-requested device 300 by means of communication via the messaging server 100, determines if it is possible to establish P2P communication, determines which device 300 should firstly connect to the other device 300, determines if it is necessary to perform special process at the time of connection, and the like, based on the combination of the NAT types of the connection-requestor/connection-requested devices 300 (described later in detail).

If it is determined that it is impossible for the both devices 300 to establish P2P connection, P2P communication is not established, and communication via the messaging server 100 is established.

Hereinafter, flows of the respective specific processes when the device 300 establishes communication will be described in detail.

### (Communication environment determining process)

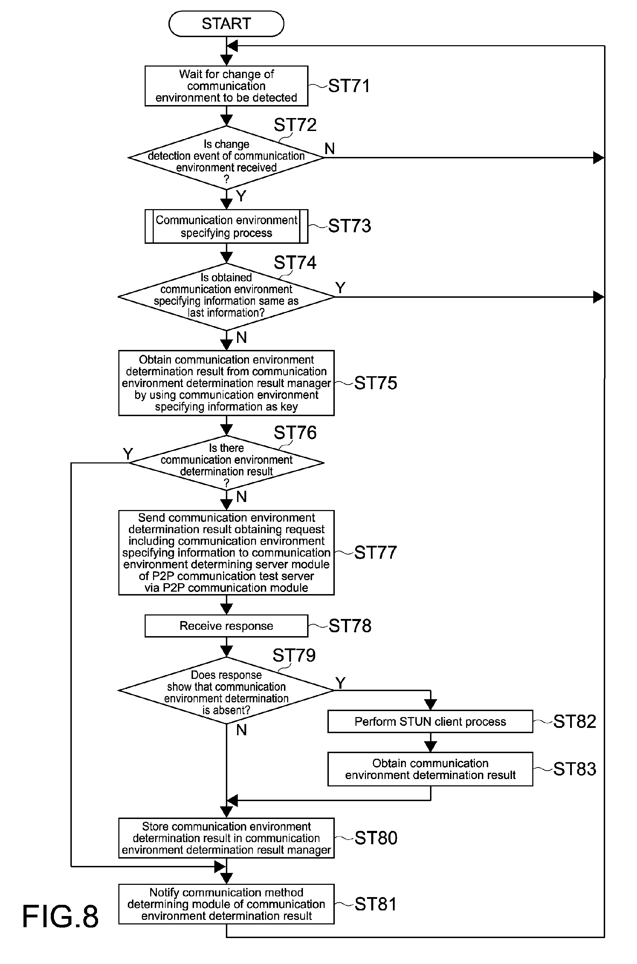

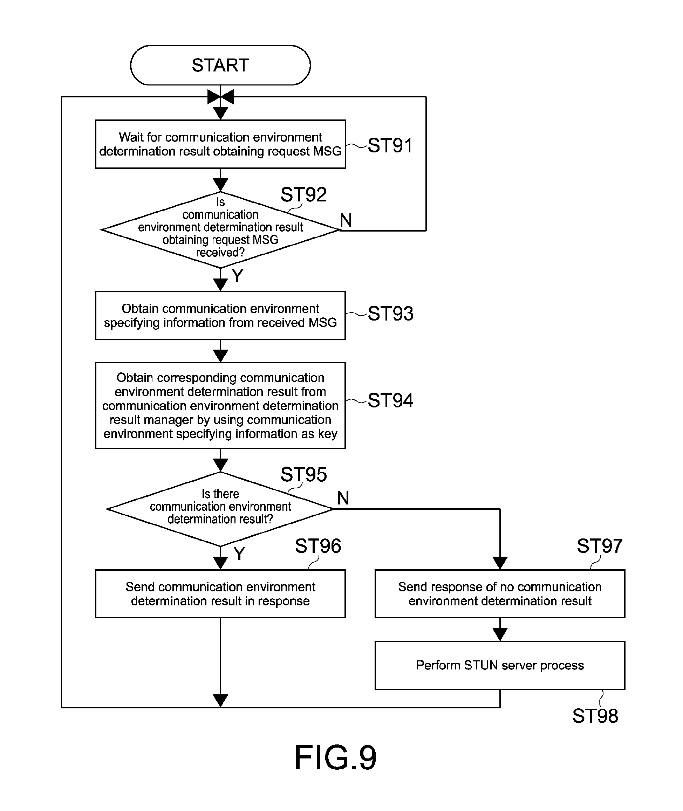

First, communication environment determining process will be described. Fig. 8 is a flowchart showing the flow of communication environment determining process performed by the device 300. Further, Fig. 9 is a flowchart showing the flow of the communication environment determining process performed by the P2P communication test server 200.

As shown in Figs. 8 and 9, the communication environment determining module 307 of the device 300 waits for change of the communication environment resulting from the travel of the device 300 to be detected by the communication environment change detecting module 310 (Fig. 8, Step 71).

Here, in the process of detecting change of the communication environment, the communication environment change detecting module 310 monitors change of for example the status of a network interface (each of a plurality of network interfaces) of the communication unit 39, the level of a signal received by the communication unit 39, the IP address used for communication, and the like. If they are changed, the communication environment change detecting module 310 determines that the communication environment changes, and notifies the communication environment determining module 307 of a communication environment change detection event.

In fact, it does not mean that all the changes require change of the communication method between the devices 300, but, triggered by those changes, the communication environment determining module 307 is capable of obtaining below-mentioned communication environment specifying information again and confirming if there is a change.

If the communication environment determining module 307 receives a change detection event of the communication environment from the communication environment change detecting module 310 (Fig. 8, Step 72, Yes), the communication environment specifying module 309 performs communication environment specifying process, and obtains communication environment specifying information (Fig. 8, Step 73).

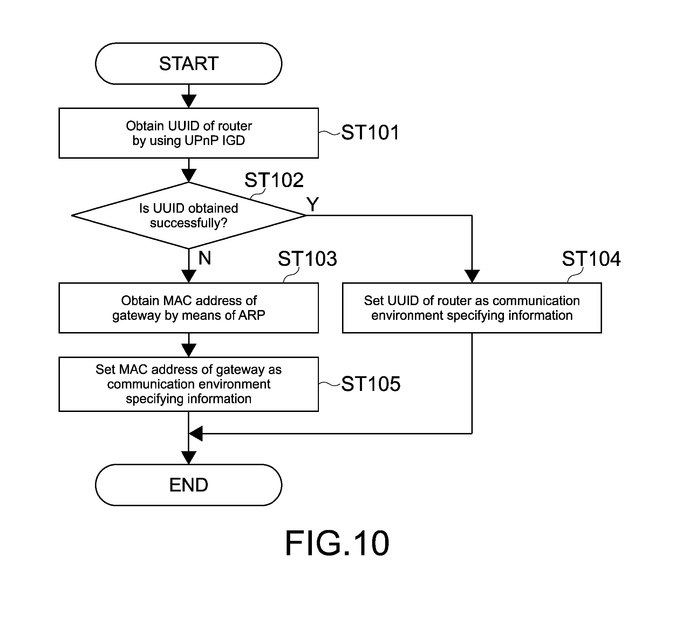

Here, the communication environment specifying process will be described in detail. Fig. 10 is a flowchart showing the flow of the communication environment specifying process.

As shown in Fig. 10, first, the communication environment specifying module 309 obtains the UUID of the router (communication relay apparatus 350) by using the UPnP IGD (Step 101).

If the above-mentioned UUID is obtained successfully (Step 102, Yes), the communication environment specifying module 309 sets the UUID of the router as communication environment specifying information (Step 104).

Meanwhile, if the above-mentioned UUID is not obtained (Step 102, No), the communication environment specifying module 309 obtains the MAC address of gateway by means of ARP (Step 103).

Then the communication environment specifying module 309 sets the MAC address of the gateway as communication environment specifying information (Step 105).

The communication environment determining module 307 obtains the UUID of the router and the MAC address of the gateway as communication environment specifying information.

The communication environment determining module 307 determines if the obtained communication environment specifying information is the same as the last information (Fig. 8, Step 74).

If it is determined that the communication environment specifying information is different from the last information (No), the communication environment determining module 307 obtains communication environment determination result information from the communication environment determination result manager 308 by using the communication environment specifying information as a key (Step 75).

If there is communication environment determination result information corresponding to the above-mentioned communication environment specifying information (Step 76, Yes), the communication environment determining module 307 notifies the communication method determining module 306 of the communication environment determination result information (Step 81).

Meanwhile, if there is no communication environment determination result information corresponding to the above-mentioned communication environment specifying information (Step 76, No), the communication environment determining module 307 sends a communication environment determination result obtaining request message including the communication environment specifying information to the communication environment determining server module 203 of the P2P communication test server 200 via the P2P communication module 305 (Step 77).

The communication environment determining server module 203 of the P2P communication test server 200 waits for the communication environment determination result obtaining request message (Fig. 9, Step 91), and, if the communication environment determining server module 203 receives the request message (Step 92, Yes), obtains communication environment specifying information from the message (Step 93).

Then the communication environment determining server module 203 obtains corresponding communication environment determination result information from the communication environment determination result manager 204 by using the obtained communication environment specifying information as a key (Step 94).

If there is a corresponding communication environment determination result (Step 95, Yes), the communication environment determining server module 203 sends the communication environment determination result information to the communication environment determining module 307 of the device 300 in response to the above-mentioned request (Step 96).

Meanwhile, if there is no corresponding communication environment determination result (Step 95, No), the communication environment determining server module 203 sends a response of no communication environment determination result to the communication environment determining module 307 of the device 300 (Step 97).

Then the communication environment determining server module 203 performs STUN server process based on the above-mentioned communication environment specifying information, obtains a communication environment determination result, and sends the communication environment determination result in response to a request from the communication environment determining module 307 of the device 300, which performs STUN client process (Step 98). The communication environment determination result manager 204 stores the communication environment determination result.

When the communication environment determining module 307 of the device 300 receives the above-mentioned response (Step 78), the communication environment determining module 307 determines if the response shows that a communication environment determination result is absent or not (Step 79).

If it is determined that the above-mentioned response includes a communication environment determination result (No), the communication environment determining module 307 stores the communication environment determination result information in the communication environment determination result manager 308 (Step 80), and notifies the communication method determining module 306 of the communication environment determination result information (Step 81).

Meanwhile, if it is determined that the above-mentioned response shows that a communication environment determination result is absent (Yes), the communication environment determining module 307 performs the above-mentioned STUN client process (Step 82), and obtains a communication environment determination result from the communication environment determining server module 203 of the P2P communication test server 200, which performs the above-mentioned STUN server process (Step 83).

Then the communication environment determining module 307 stores the obtained communication environment determination result information in the communication environment determination result manager 308 (Step 80), and notifies the communication method determining module 306 of the obtained communication environment determination result information (Step 81).

### (Communication method determining process)

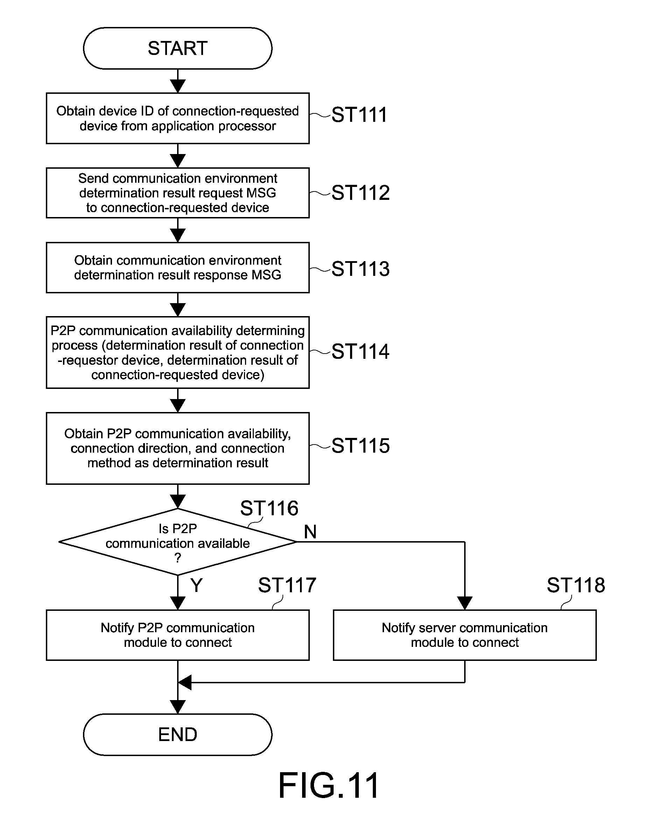

Next, communication method determining process based on the above-mentioned communication environment determination result will be described. Fig. 11 is a flowchart showing the flow of communication method determining process performed by the device 300.

As shown in Fig. 11, first, the communication method determining module 306 of the device 300 obtains the device ID of the connection-requested device 300 from the application processor 301 (Step 111).

Then the communication method determining module 306 sends a communication environment determination result request message to the connection-requested device 300 (Step 112).

Then the communication method determining module 306 obtains a communication environment determination result response message from the connection-requested device 300 (Step 113).

Then the communication method determining module 306 performs P2P communication availability determining process (Step 114). In the process, both the determination result of the connection-requestor device 300 and the determination result of the connection-requested device 300 are used.

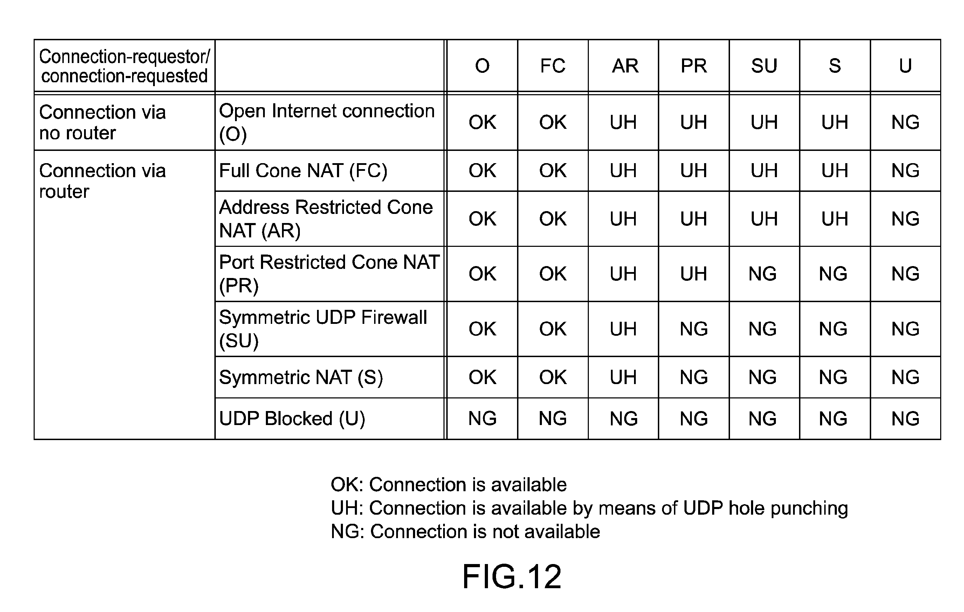

For example, the P2P communication availability determining process is performed by the above-mentioned P2P communication test server 200 depending on the NAT type determined by means of STUN. Fig. 12 is a table showing availability of P2P communication depending on NAT types.

In Fig. 12, "OK" means connection is available without any setting, "UH" means that connection is available by means of UDP hole punching, and "NG" means that connection is not available. The communication method determining module 306 stores the table as data, applies the NAT types of the above-mentioned communication environment determination results of the connection-requestor and connection-requested devices 300 to the table, and determines connection availability.

Here, the determination result of connection from the connection-requestor device 300 to the connection-requested device 300 is sometimes different from the determination result of connection from the connection-requested device 300 to the connection-requestor device 300 (connection from connection-requested device is advantageous). In view of this, the communication method determining module 306 determines connection availability of the both devices 300 (in consideration of the case where the connection-requestor device and the connection-requested device are interchanged), and determines availability of P2P communication, a connection direction, and a connection method.

For example, it is assumed about connection direction that connection in only one direction is available, connection in the both directions with special setting is available, or the like depending on existence/non-existence of the communication relay apparatuses 350 of the both devices 300 such as NAT routers, proxy servers, or firewalls, and depending on the types thereof. In view of this, the direction that enables connection or the direction requires the least special setting is determined as the connection direction.

The communication method determining module 306 obtains P2P communication availability, a connection direction, and a connection method as the determination result of the above-mentioned determining process (Step 115).

Then the communication method determining module 306 determines if P2P communication is available or not based on the above-mentioned determination result (Step 116).

If it is determined that P2P communication is available (Yes), the communication method determining module 306 notifies the P2P communication module 305 to connect to the other device 300 by means of P2P communication by using the connection method determined as described above and in the connection direction determined as described above (Step 117).

Meanwhile, if it is determined that P2P communication is not available (No), the communication method determining module 306 notifies the server communication module 304 to connect to the other device 300 via the messaging server 100 (Step 118).

### (P2P communication connection process)

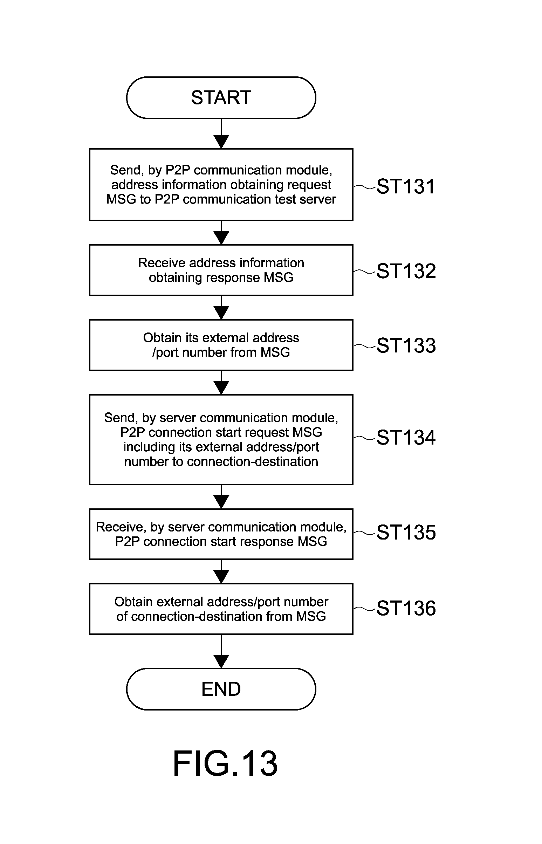

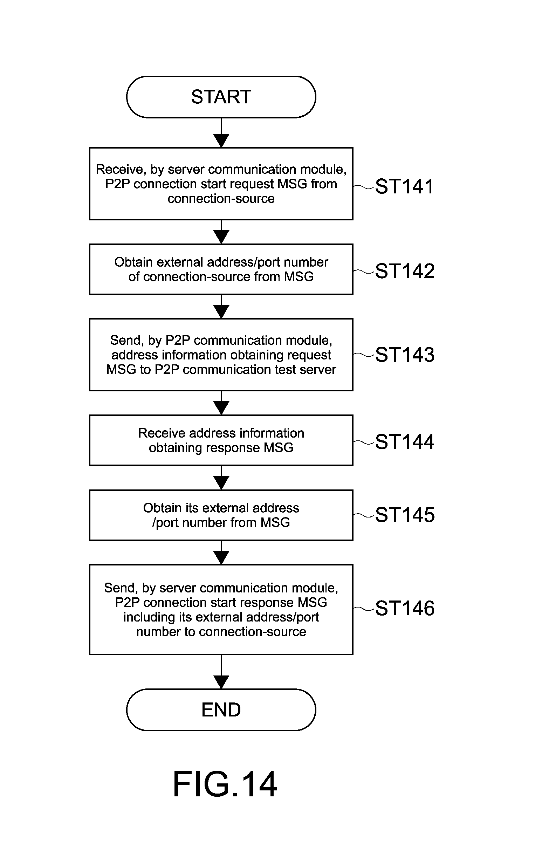

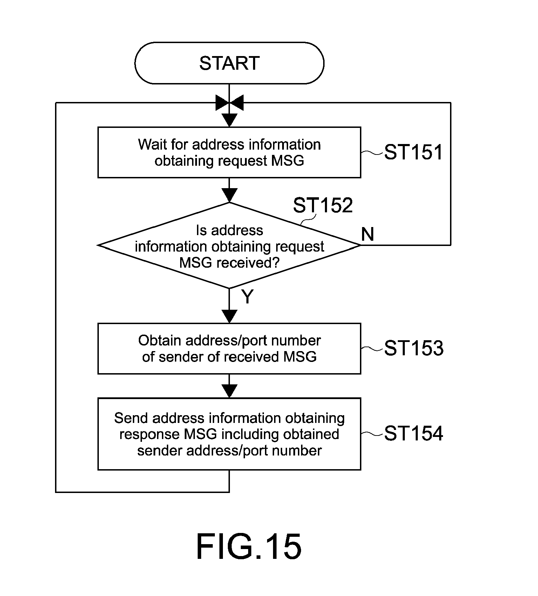

Next, P2P communication connection process in a case where it is determined that P2P communication is available will be described. Fig. 13 is a flowchart showing the flow of P2P communication connection process performed by the connection-source device 300. Further, Fig. 14 is a flowchart showing the flow of P2P communication connection process performed by the connection-destination device 300. Further, Fig. 15 is a flowchart showing the flow of P2P communication connection process performed by the P2P communication test server 200. Further

First, the P2P communication module 305 of the connection-source device 300 sends an address information obtaining request message to the P2P communication test server 200 (Fig. 13, Step 131).

The address information obtaining server module 202 of the P2P communication test server 200 waits for the above-mentioned address information obtaining request message (Fig. 15, Step 151), and, if the address information obtaining server module 202 receives the address information obtaining request message (Step 152), obtains the external IP address and the port number of the sender of the received message (Step 153).

Then the address information obtaining server module 202 sends an address information obtaining response message including the obtained sender address and port number to the P2P communication module 305 of the above-mentioned connection-source device 300 (Step 154).

If the P2P communication module 305 of the connection-source device 300 receives the above-mentioned address information obtaining response message from the P2P communication test server 200 (Fig. 13, Step 132), the P2P communication module 305 obtains its external address and its port number from the message (Step 133).

Then the server communication module 304 sends a P2P connection start request message including its external address and its port number to the connection-destination device 300 via the messaging server 100 (Step 134).

The server communication module 304 of the connection-destination device 300 receives the P2P connection start request message from the above-mentioned connection-source device 300 via the messaging server 100 (Fig. 14, Step 141).

Then the P2P communication module 305 of the connection-destination device 300 obtains the external address and the port number of the connection-source device 300 from the above-mentioned message (Step 142).

Then the P2P communication module 305 of the connection-destination device 300 sends an address information obtaining request message to the P2P communication test server 200 (Step 143).

Similar to the above, the address information obtaining server module 202 of the P2P communication test server 200 obtains the external IP address and the port number of the sender of the above-mentioned request message, and sends a response message including them to the P2P communication module 305 of the connection-destination device 300 (Fig. 15, Steps 151 to 154).

Then, if the P2P communication module 305 of the connection-destination device 300 receives the above-mentioned address information obtaining response message from the P2P communication test server 200 (Fig. 14, Step 144), the P2P communication module 305 obtains its external address and its port number from the message (Step 145).

Then the server communication module 304 of the connection-destination device 300 sends a P2P connection start response message including its external address and its port number to the connection-source device 300 via the messaging server 100 (Step 146).

If the server communication module 304 of the connection-source device 300 receives the P2P connection start response message from the connection-destination device 300 (Fig. 13, Step 135), the server communication module 304 obtains the external address and the port number of the connection-destination device 300 from the message.

After that, P2P communication process is actually performed between the connection-source device 300 and the connection-destination device 300 in the connection direction determined as described above by using the connection method determined as described above. At this time, the connection-destination device 300 may temporarily perform address/port number transfer setting of the WAN/LAN by using a UPnP IGD depending on the type of the NAT router and the like, manual port forwarding setting, change of firewall function setting, or the like, in order to accept access from the connection-source device 300.

### (Message transfer process)

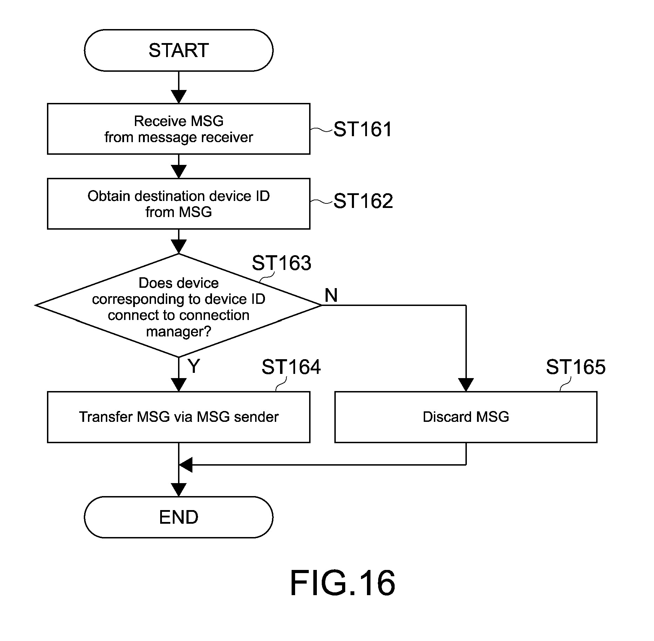

Next, message transfer process between the devices 300 performed by the messaging server 100 will be described. Fig. 16 is a flowchart showing the flow of the message transfer process. The message transfer process is not only performed in exchange of P2P connection start request/response messages in the above-mentioned P2P communication connection process, but also performed in exchange of general messages between the devices 300 if it is determined that P2P communication is not available.

As shown in Fig. 16, the message transfer processor 103 of the messaging server 100 receives, from the message receiver 102, a message from the device 300 (Step 161).

Then the message transfer processor 103 obtains a destination device ID from the above-mentioned received message (Step 162).

Then the message transfer processor 103 determines if the device 300 corresponding to the above-mentioned destination device ID connects to the connection manager 101 (Step 163).

If it is determined that the device 300 corresponding to the destination device ID is connected (Yes), the message transfer processor 103 transfers a message to the destination device 300 via the message sender 104 (Step 164).

Meanwhile, if it is determined that the device 300 corresponding to the destination device ID is not connected (No), the message transfer processor 103 discards the message (Step 165).

### (Example of change of P2P communication method)

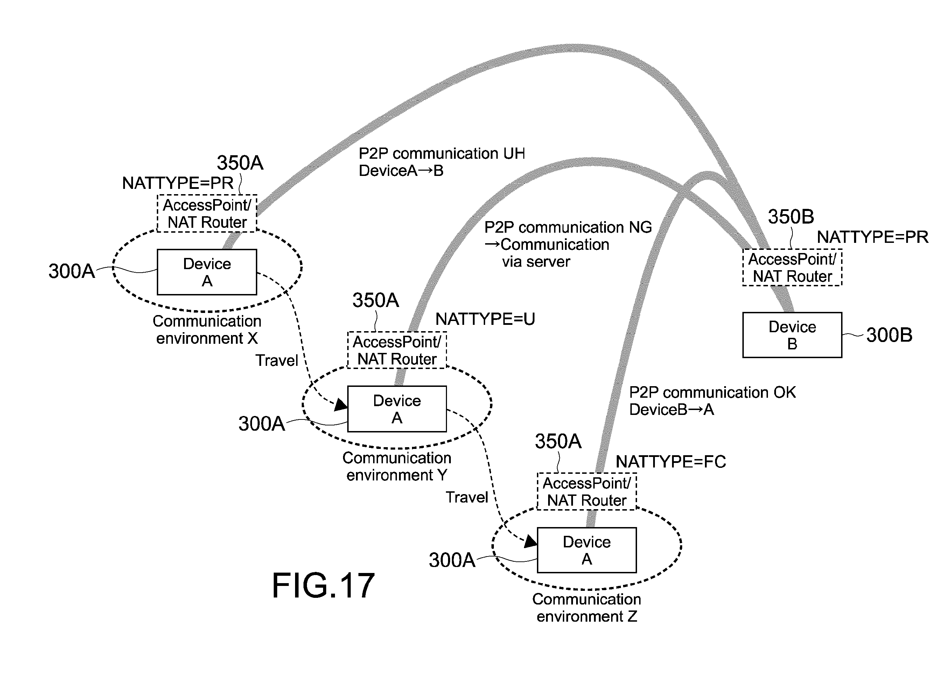

Fig. 17 is a diagram showing an example of change of the P2P communication method between the devices 300 resulting from travel of the device 300.

Fig. 17 shows the case where the traveling device 300A P2P communicates with the stationary device 300B. A NAT router (communication relay apparatus 350B), whose NAT type is port restricted cone NAT (PR), connects to the device 300B.

As shown in Fig. 17, if the device 300A is in a communication environment X, in which the NAT type of the communication relay apparatus 350B connected to the device 300A is the port restricted cone NAT (PR), the device 300A connects to the device 300B to thereby start P2P communication between the devices 300B by means of UDP hole punching (UH).

After that, if the device 300A travels to a communication environment Y, in which the NAT type of the communication relay apparatus 350A connected to the device 300A is the UDP blocked (U), P2P communication with the device 300B is not available, and communication via the messaging server 100 is thus established.

After that, if the device 300A travels to a communication environment Z, in which the NAT type of the communication relay apparatus 350A connected to the device 300A is the full cone NAT (FC), the device 300B connects to the device 300A to thereby start P2P communication with the device 300B without special setting.

As described above, each device 300 changes the P2P communication method and the communication method via the messaging server 100, the connection direction in P2P communication, and the connection method depending on change of the communication environment resulting from the travel of each device 300, and establishes communication.

### (Description of logical communication module)

As described above, the above-mentioned logical communication module 302 provides a plurality of communication primitives in order to increase convenience of applications based on message communication (packet communication) treated by the routing module 303 and the lower layers.

According to this embodiment, the logical communication module 302 is configured to provide three communication primitives, i.e., RPC, messages, and byte streams, and to perform Http emulation by using byte streams.

Specifically, similar to the case where TCP is implemented in IP, a mechanism of flow-controlling and resending messages (packets) and of establishing stream communication is implemented in the logical communication module 302.

According to this embodiment, because communication via the messaging server 100 and P2P communication are interchangeable or both of them are used together in the lower message communication layer, even if the communication method via the messaging server 100 and the P2P the messaging server 100 are interchanged, connection of the logical communication primitive continues in the logical communication layer.

As a result, the device 300 is capable of changing the above-mentioned communication method seamlessly while continuing the operation of the application layer, which keeps a user free from recognizing the change.

### [Conclusion]

As described above, according to this embodiment, depending on change of the communication environment resulting from the travel of the device 300, connection via the messaging server 100 and P2P connection are interchanged, and the P2P connection method (including connection direction) is changed.

Further, according to this embodiment, the device 300 includes a means for specifying a communication environment, and a mechanism to store a communication environment (NAT type) determination result by using the thus obtained information as a key. As a result, thanks to the device 300, it is not necessary for the P2P communication test server 200 (STUN server) to perform determining process every time to determine the P2P communication method (or opportunity is reduced).

Further, according to this embodiment, because the messaging server 100 also records communication environment determination result information, the devices 300 share the communication environment determination result information. As a result, even if different devices 300 establish P2P communication in the same communication environment, the messaging server 100 is capable of omitting process of determining a communication environment.

### <Second embodiment>

Next, a second embodiment of the present technology will be described. In this embodiment, unless otherwise stated, the configuration is similar to the configuration of the above-mentioned first embodiment. Further, in this embodiment, the functions and configurations similar to the functions and configurations of the above-mentioned first embodiment will be denoted by the similar reference symbols, and description thereof will be omitted or simplified.

### [Network configuration of system and module configuration of device]

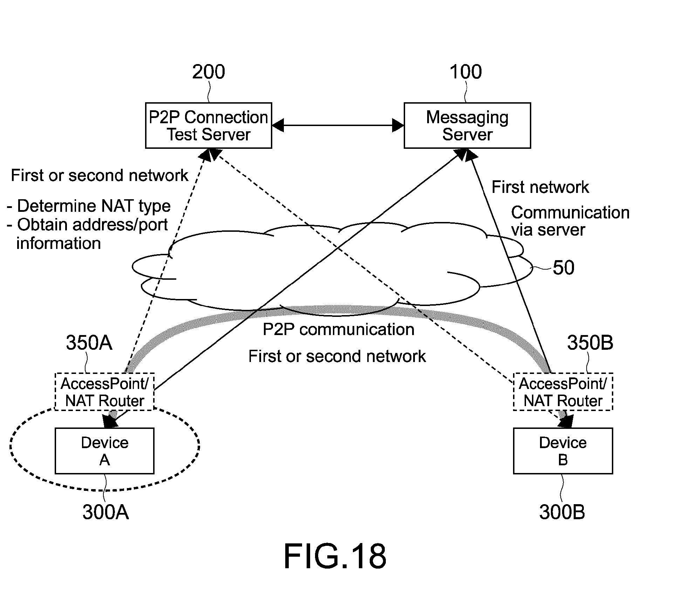

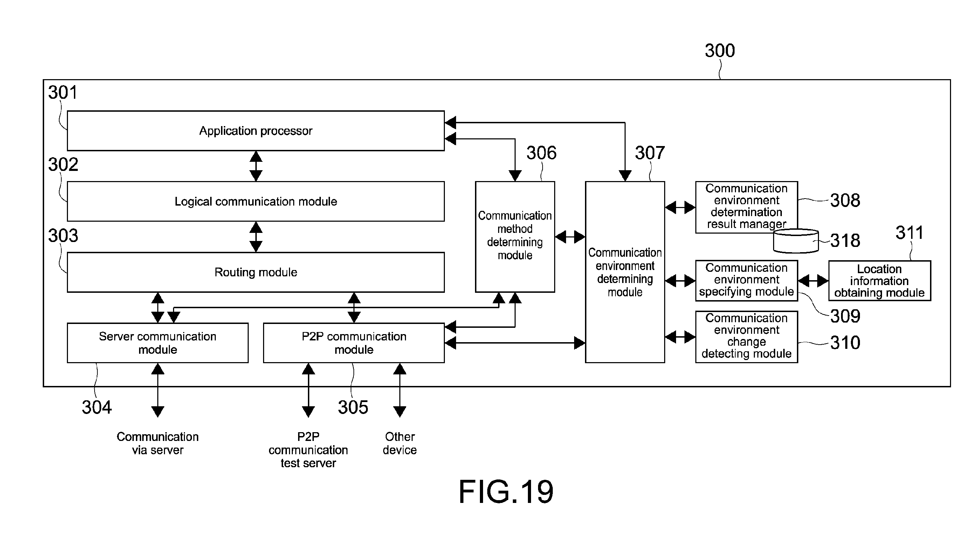

Fig. 18 is a diagram showing the network configuration of the system of this embodiment. Further, Fig. 19 is a block diagram showing the configuration of software modules of the device 300 of this embodiment. The hardware configuration and the software module configuration of the messaging server 100 and the hardware configuration and the software module configuration of the P2P communication test server 200 are similar to those of the above-mentioned first embodiment.

This embodiment is different from the above-mentioned second embodiment in that the device 300 includes a plurality of network interfaces, which support a plurality of networks.

That is, in this embodiment, the P2P communication module 305, the communication environment change detecting module 310, and the communication environment determining module 307 of the device 300 support the above-mentioned plurality of networks and network interfaces. Specifically, the device 300 includes a first network interface, which supports a first network (e.g., 3G network), and a second network interface, which supports a second network (e.g., Wireless LAN, WiFi, etc.).

Further, as shown in Fig. 19, in this embodiment, the device 300 includes a location information obtaining module 311 in addition to the software modules similar to those of the above-mentioned first embodiment.

The location information obtaining module 311 periodically obtains location information on the device 300 via any network or from an external location information obtaining means such as a GPS.

When the communication environment specifying module 309 creates communication environment specifying information, the communication environment specifying module 309 also adds the location information obtained from the location information obtaining module 311 to the communication environment specifying information. The communication environment specifying information including the location information is stored in the communication environment determination result manager 308 (storage unit 38) in association with the above-mentioned communication environment determination result information.

For example, 3G network, i.e., the first network, is characterized in that the band is narrow, the available area is large, and a global IP address is assigned. Meanwhile, WiFi network, i.e., the second network, is characterized in that the band is wide, the available area is small, and a private IP address is often assigned. The device 300 uses the characteristics of the first network and the characteristics of the second network, to thereby realize communication more effective for the mobile device 300.

Specifically, the device 300 makes the first network always effective, and communication via the messaging server 100 is established via the first network.

Meanwhile, the device 300 turns on the power to the network interface of the second network only if the device 300 obtains location information from the first network or another means and only if the device 300 exists in the vicinity of the location at which P2P communication was available in the past.

### [Operation of system]

Hereinafter, the operation of the system of this embodiment will be described specifically.

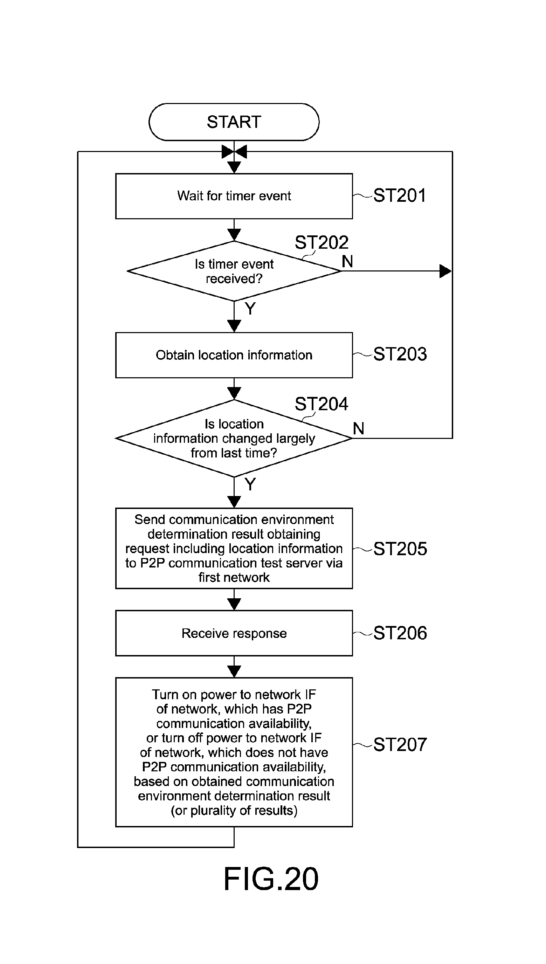

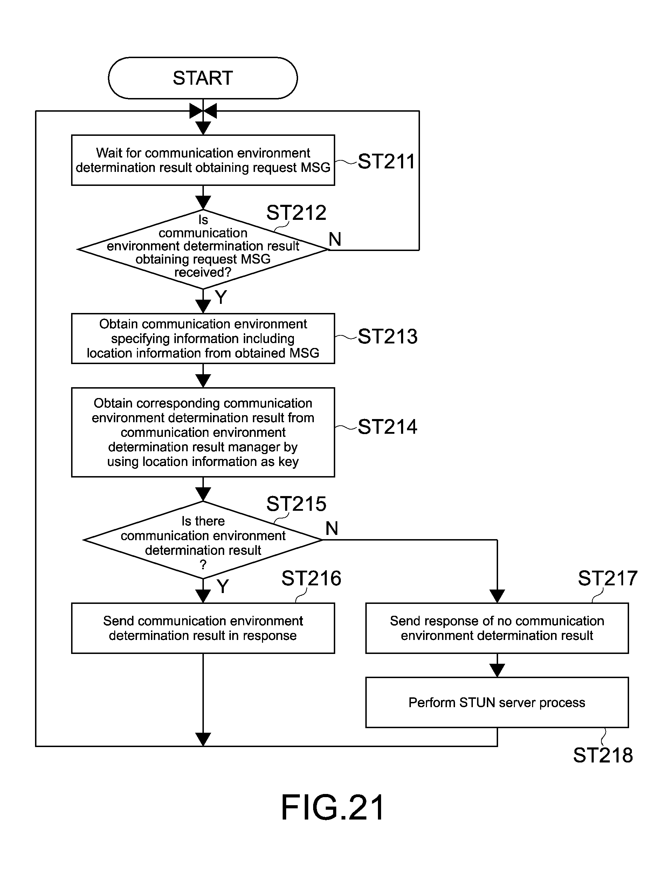

Fig. 20 is a flowchart showing the flow of network interface control process depending on P2P communication availability performed by the device 300. Further, Fig. 21 is a flowchart showing the flow of communication environment determining process in relation to network interface control process performed by the P2P communication test server 200.

First, the location information obtaining module 311 of the device 300 waits for a timer event to obtain location information (Fig. 20, Step 201), and, if the location information obtaining module 311 receives the timer event (Step 202, Yes), the location information obtaining module 311 obtains the location information on the device 300 via the first network, a GPS, or the like (Step 203).

Then the communication environment determining module 307 obtains the above-mentioned location information from the communication environment specifying module 309, and determines if the location information is changed largely from the location information obtained the last time or not (Step 204).

If it is determined that the location information is changed largely (Yes), the communication environment determining module 307 sends a communication environment determination result obtaining request, which includes communication environment specifying information including the location information, to the P2P communication test server 200 via the first network (Step 205).

The communication environment determining server module 203 of the P2P communication test server 200 waits for the communication environment determination result obtaining request message (Fig. 21, Step 211), and, if the communication environment determining server module 203 receives the request message (Step 212, Yes), obtains the communication environment specifying information including the location information from the message (Step 213).

Then the communication environment determining server module 203 obtains the corresponding communication environment determination result information from the communication environment determination result manager 204 by using the location information in the obtained communication environment specifying information as a key (Step 214). At this time, the communication environment determining server module 203 obtains a communication environment determination result (or all of a plurality of communication environment determination results) determined to be in the vicinity of the location shown by the location information.

If there is a corresponding communication environment determination result (Step 215, Yes), the communication environment determining server module 203 sends the communication environment determination result information to the communication environment determining module 307 of the device 300 in response to the above-mentioned request (Step 216).

Meanwhile, if there is no communication environment determination result at all (Step 215, No), the communication environment determining server module 203 sends a response of no communication environment determination result to the communication environment determining module 307 of the device 300 (Step 217).

Then the communication environment determining server module 203 performs STUN server process based on the above-mentioned communication environment specifying information, obtains a communication environment determination result, and sends the communication environment determination result in response to a request from the communication environment determining module 307 of the device 300, which performs STUN client process (Step 98). The communication environment determination result manager 204 stores the communication environment determination result in association with the above-mentioned location information.

The communication environment determining module 307 of the device 300 receives the above-mentioned response from the P2P communication test server 200 (Fig. 20, Step 206).

Then the communication environment determining module 307 determines availability of P2P communication with another device 300 based on the obtained communication environment determination result (or plurality of results). Then the communication environment determining module 307 turns on the power to the network interface of a network, which has P2P communication availability. Meanwhile, the communication environment determining module 307 turns off the power to the network interface of a network, which does not have P2P communication availability (Step 207).

After that, if P2P communication is available, P2P communication with another device 300 is established via the network interface, to which the power is turned on.

### (Example of change of P2P communication method)

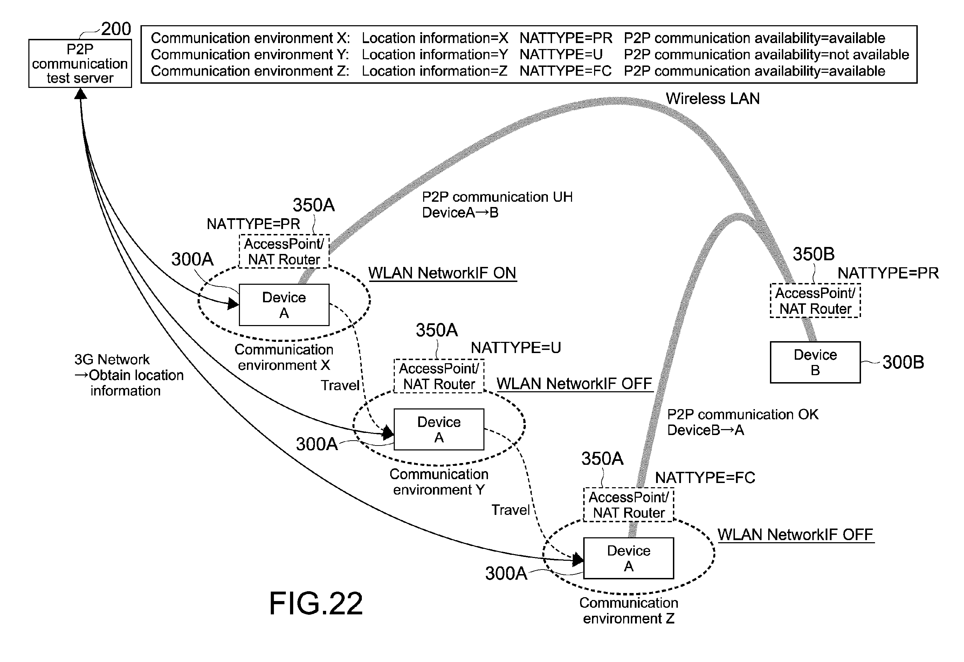

Fig. 22 is a diagram showing an example of change of the P2P communication method between the devices 300 resulting from travel of the device 300 in this embodiment and the relation between a plurality of networks and the devices 300.

Similar to the example of the above-mentioned first embodiment shown in Fig. 17, Fig. 22 shows the case where the traveling device 300A P2P communicates with the stationary device 300B. The NAT types of the device 300A in the communication environments X, Y, and Z and the NAT type of the device 300B are similar to the above-mentioned examples of Fig. 17.

As shown in Fig. 22, if the device 300A has a location information X and is in the communication environment X, the device 300A is capable of P2P communicating with the device 300B. Here, if it is determined that a second network (WLAN) is available, the power to a second network interface (WLAN interface) is turned on.

Further, if the device 300B has a location information Y and is in the communication environment Y, because P2P communication with the device 300B is not available, the power to a second network interface is turned off.

Further, if the device 300B has a location information Z and is in the communication environment Z, P2P communication with the device 300B is available. However, here, if it is determined that the second network is not available, the power to the second network interface is turned off, and P2P communication via the first network is established.

### [Conclusion]

As described above, according to this embodiment, if the device 300 has a plurality of network interfaces, the device 300 is capable of establishing connection via the messaging server 100 via for example a 3G network, and establishing P2P connection and high-speed communication if P2P connection is available via a WiFi network.

Further, according to this embodiment, the device 300 obtains location information from the 3G network, and stores information on availability of P2P communication in the WiFi network in association with the location information. With this configuration, the device 300 usually turns off the power to a WiFi network interface, and turns on the power only if the device 300 is in the vicinity of a location at which P2P communication was available in the past, whereby it is possible to establish P2P communication with the power consumption decreased.

### [Examples of modification]

The present technology is not limited to the above-mentioned embodiments, but may be variously changed within the gist of the present technology.

In the above-mentioned first and second embodiments, the P2P communication test server 200 is provided as a STUN server performing the communication environment determining process and performing the process of obtaining an IP address and a port number for P2P communication. However, the messaging server 100 may have the functions of the P2P communication test server 200.

In the above-mentioned first and second embodiments, only one messaging server 100 is in a cloud, but a plurality of messaging servers 100 may be provided. In this case, a message from the device 300 may be relayed between the plurality of messaging servers 100. That is, a particular messaging server 100 out of the plurality of messaging servers 100 is allocated to each device 300 as a server to be used (server in charge). Any allocation method may be employed, and for example the messaging servers may be allocated based on IDs of the respective devices and the respective messaging servers. If a messaging server 100 receives a message sent from a device 300, this messaging server 100 being not in charge of this device, the message is transferred to another messaging server 100, which is in charge of this device.

In the above-mentioned second embodiment, a 3G network and a wireless LAN (WiFi) are shown as examples of a plurality of networks, but, as a matter of course, networks other than them may be used. For example, other networks such as a 4G network, an LTE network, and a WiMAX network, and network interfaces corresponding thereto may be used.

In the example of the above-mentioned first and second embodiments, the device 300 includes the communication method determining module 306, the communication environment determining module 307, and the communication environment determination result manager 308. However, the cloud side (above-mentioned messaging server 100 or other server) may include one of or all of the functions of the communication method determining module, the communication environment determining module, and the communication environment determination result manager.

### [Note]

The present technology may employ the following configurations.
(1) An information processing apparatus, comprising:
   a communication unit capable of communicating with another information processing apparatus in a network by using a method via a relay server in the network or a peer-to-peer method via no relay server; and
   a controller detecting a communication environment of the information processing apparatus, the controller being capable of determining a method of communicating with the other information processing apparatus depending on the communication environment by means of the peer-to-peer communication if at all possible.
(2) The information processing apparatus according to the above-mentioned item (1), wherein
   the controller detects change of a communication environment resulting from travel of the information processing apparatus, and determines the communication method depending on the change of the communication environment.
(3) The information processing apparatus according to the above-mentioned item (1) or (2), wherein
   the controller determines existence/non-existence of a communication relay apparatus installed between the information processing apparatus and the other information processing apparatus, and the network, or a type of the communication relay apparatus, and determines whether the information processing apparatus or the other information processing apparatus starts the peer-to-peer communication depending on the existence/non-existence of installation or the type.
(4) The information processing apparatus according to the above-mentioned item (2) or (3), wherein
   the controller detects change of the communication environment based on at least one of change of a status of the communication unit, change of a level of a signal received by the communication unit, and change of an IP address used by the communication unit.
(5) The information processing apparatus according to any one of the above-mentioned items (1) to (4), further comprising:
   a storage unit, wherein
   the communication unit is capable of communicating with a determining server in the network, the determining server being capable of determining the communication environment, and
   the controller
      controls the communication unit to receive communication environment determined information showing the determined communication environment,
      controls the storage unit to store the received communication environment determined information, and
      determines the communication method based on the stored communication environment determined information.
(6) The information processing apparatus according to the above-mentioned items (1) to (5), wherein
   the communication unit includes
   a first network interface capable of connecting to a first network having a first band and a first available area, and
   a second network interface capable of connecting to a second network having a second band and a second available area, and
   the controller controls the communication unit to use the first network interface for communication with the other information processing apparatus via the relay server, and to use the second network interface if at all possible for the peer-to-peer communication with the other information processing apparatus.
(7) The information processing apparatus according to the above-mentioned item (6), wherein
   the second band is larger than the first band, and
   the second available area is smaller than the first available area.
(8) The information processing apparatus according to the above-mentioned item (6), further comprising:
   a storage unit, wherein
   the controller
      controls the communication unit to receive location information showing a location of the information processing apparatus via the first network interface,
      controls the storage unit to store the communication environment determined information in association with the received location information, and
      enables a network interface determined that the peer-to-peer communication is available, and disables a network interface determined that the peer-to-peer communication is not available, based on the received location information and based on the stored location information and communication environment determined information.
(9) The information processing apparatus according to the above-mentioned items (1) to (8), wherein
   the communication unit includes a logical communication module capable of continuing communication by the same procedure by using an application of the information processing apparatus, even if the communication method is changed.

### Description of Symbols

- 31: CPU
- 33: RAM
- 38: storage unit
- 39: communication unit
- 50: WAN
- 100: messaging server
- 200: P2P communication test server
- 201: connection manager
- 202: address information obtaining server module
- 203: communication environment determining server module
- 204: communication environment determination result manager
- 300 (300A, 300B): device
- 301: application processor
- 302: logical communication module
- 303: routing module
- 304: server communication module
- 305: P2P communication module
- 306: communication method determining module
- 307: communication environment determining module
- 308: communication environment determination result manager
- 309: communication environment specifying module
- 310: communication environment change detecting module
- 311: location information obtaining module
- 350 (350A, 350B): communication relay apparatus

## Claims

1. An information processing apparatus, comprising:
a communication unit capable of communicating with another information processing apparatus in a network by using a method via a relay server in the network or a peer-to-peer method via no relay server; and
a controller detecting a communication environment of the information processing apparatus, the controller being capable of determining a method of communicating with the other information processing apparatus depending on the communication environment by means of the peer-to-peer communication if at all possible.

2. The information processing apparatus according to claim 1, wherein
the controller detects change of a communication environment resulting from travel of the information processing apparatus, and determines the communication method depending on the change of the communication environment.

3. The information processing apparatus according to claim 1, wherein
the controller determines existence/non-existence of a communication relay apparatus installed between the information processing apparatus and the other information processing apparatus, and the network, or a type of the communication relay apparatus, and determines whether the information processing apparatus or the other information processing apparatus starts the peer-to-peer communication depending on the existence/non-existence of installation or the type.

4. The information processing apparatus according to claim 2, wherein
the controller detects change of the communication environment based on at least one of change of a status of the communication unit, change of a level of a signal received by the communication unit, and change of an IP address used by the communication unit.

5. The information processing apparatus according to claim 1, further comprising:
a storage unit, wherein
the communication unit is capable of communicating with a determining server in the network, the determining server being capable of determining the communication environment, and
the controller
controls the communication unit to receive communication environment determined information showing the determined communication environment,
controls the storage unit to store the received communication environment determined information, and
determines the communication method based on the stored communication environment determined information.

6. The information processing apparatus according to claim 1, wherein
the communication unit includes
a first network interface capable of connecting to a first network having a first band and a first available area, and
a second network interface capable of connecting to a second network having a second band and a second available area, and
the controller controls the communication unit to use the first network interface for communication with the other information processing apparatus via the relay server, and to use the second network interface if at all possible for the peer-to-peer communication with the other information processing apparatus.

7. The information processing apparatus according to claim 6, wherein
the second band is larger than the first band, and
the second available area is smaller than the first available area.

8. The information processing apparatus according to claim 6, further comprising:
a storage unit, wherein
the controller
controls the communication unit to receive location information showing a location of the information processing apparatus via the first network interface,
controls the storage unit to store the communication environment determined information in association with the received location information, and
enables a network interface determined that the peer-to-peer communication is available, and disables a network interface determined that the peer-to-peer communication is not available, based on the received location information and based on the stored location information and communication environment determined information.

9. The information processing apparatus according to claim 1, wherein
the communication unit includes a logical communication module capable of continuing communication by the same procedure by using an application of the information processing apparatus, even if the communication method is changed.

10. An information processing method, performed by an information processing apparatus, comprising:
detecting a communication environment of the information processing apparatus; and
determining, as a method of communicating with another information processing apparatus, one of a method of communicating with the other information processing apparatus via a relay server in a network and a peer-to-peer communication method via no relay server based on the communication environment, the peer-to-peer communication method being selected if at all possible.

11. A program, causing an information processing apparatus to execute:
the step of detecting a communication environment of the information processing apparatus; and
the step of determining, as a method of communicating with another information processing apparatus, one of a method of communicating with the other information processing apparatus via a relay server in a network and a peer-to-peer communication method via no relay server based on the communication environment, the peer-to-peer communication method being selected if at all possible.

12. An information processing apparatus, comprising:
a communication unit capable of communicating with a first communication apparatus and a second communication apparatus in the network, the first communication apparatus and the second communication apparatus being capable of communicating with each other by using a method via a relay server in a network or a peer-to-peer method via no relay server; and
a manager managing determined information determining a communication environment of the first or second communication apparatus, the determined information being available for one communication apparatus of the first and second communication apparatuses to peer-to-peer communicate with the other communication apparatus if at all possible depending on the communication environment.
